# EUROPEAN PATENT SPECIFICATION

(11) **EP 3 184 264 B1**
(45) Date of publication and mention of the grant of the patent: **28.12.2022**
(21) Application number: 16200874.2
(22) Date of filing: 28.11.2016
(51) Int. Cl.: B25J 15/04, B25J 19/00

(54) **DEVICE FOR CONNECTION OF A TOOL TO AN INDUSTRIAL ROBOT ARM**
VORRICHTUNG ZUM VERBINDEN EINES WERKZEUGS MIT EINEM INDUSTRIEROBOTERARM
DISPOSITIF DE CONNEXION D'UN OUTIL À UN BRAS DE ROBOT INDUSTRIEL

(30) Priority: 02.12.2015 IT UB20156099
(43) Date of publication of application: 28.06.2017
(73) Proprietor: Robotools S.r.l., 10146 Torino (IT)
(72) Inventor: STROBIETTO, Elio, I-10146 Torino (IT)
(74) Representative: Frontoni, Stefano

(56) References cited:
- DE-U1-202007 013 056
- US-A- 4 815 780
- US-A1- 2009 314 113
- US-A1- 2014 102 547

## Description

### Field of the invention

The present invention relates to a device for connection of a tool to an industrial robot arm.

### Prior art

As is known in the art, the devices in question, also referred to as tool-change devices, have the dual function of ensuring fixing of the tool on the wrist of the robot arm and, one the other hand, to provide the connection between the electrical and/or service-fluid connections coming from the robot and the tool.

Tool-change devices known in the art in general comprise an annular body, which is mounted on the robot wrist and carries the members for fixing the tool, which are generally constituted by a substantially cylindrical head that carries a series of clamping elements that can be driven via pneumatic means into a position where they project from the outer surface of the head. The tool is usually coupled to an annular body designed to be mounted on the cylindrical head of the tool-change device and to couple, with a face thereof, to a corresponding face of the annular body of the device. Moreover, made in the annular body of the tool-change device are one or more bores or cavities for electrical or service-fluid connections of the robot, which are designed to set themselves in a condition of connection with corresponding bores or cavities made in the annular body associated to the tool, which are also designed for the connections of the tool.

During operation of the device, the annular body of the tool is mounted on the cylindrical head of the tool-change device and is fixed thereto via activation of the clamping elements referred to above. At the same time, via coupling of the opposed faces of the two annular bodies, of the tool, and of the tool-change device, union between the respective connections is established.

The tool-change devices in question hence enable a fast connection between the tool and the robot arm, both from the standpoint of mechanical fixing and from the standpoint of the electrical and service-fluid connections.

With reference now to the connections in question, known to the art are robot arms on which the electrical cables, pipes, and/or conduits constituting the connections for the tool - and possibly also the connections for the motors of the arm itself that drive the wrist thereof - are arranged in a single bundle within the robot arm, either throughout its length or in any case at least in the wrist area, the aim being to provide a protection for these connections as likewise to rule out the risk of the latter interfering with the movement of the robot, for example getting caught up in other elements or members present in the working area.

However, so far, in all known tool-change devices it is possible to connect the connections coming from the robot arm only and always from outside so that for these connections there becomes necessary a complicated and winding passage from the inside of the robot wrist to the outside, a fact that, among other things, in part jeopardizes the advantages deriving from arrangement of the connections inside the wrist.

US4815780A and DE202007013056U1 disclose prior art solutions of possible interest with respect to the background of the solution here described..

### Object and summary of the invention

In the above context, the object of the present invention is to provide a tool-change device that will be improved as compared the known solutions referred to above.

The above object is achieved via a device having the characteristics of Claim 1.

The claims form an integral part of the technical teaching provided herein in relation to the invention.

### Detailed description of some embodiments

Further characteristics and advantages of the invention will emerge clearly from the ensuing description with reference to the annexed drawings, which are provided purely by way of non-limiting example and in which:
- Figure 1 illustrates an embodiment of the device described herein, in a cross-sectional view according to a principal plane of the device;

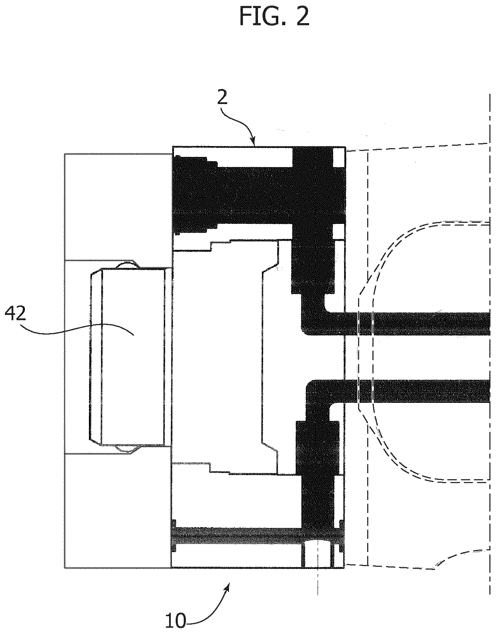

- Figure 2 illustrates a condition of use of the device described herein on a robot arm;
- Figure 3 illustrates a second embodiment of the device described herein, in a cross-sectional view according to a principal plane of the device;
- Figure 4,

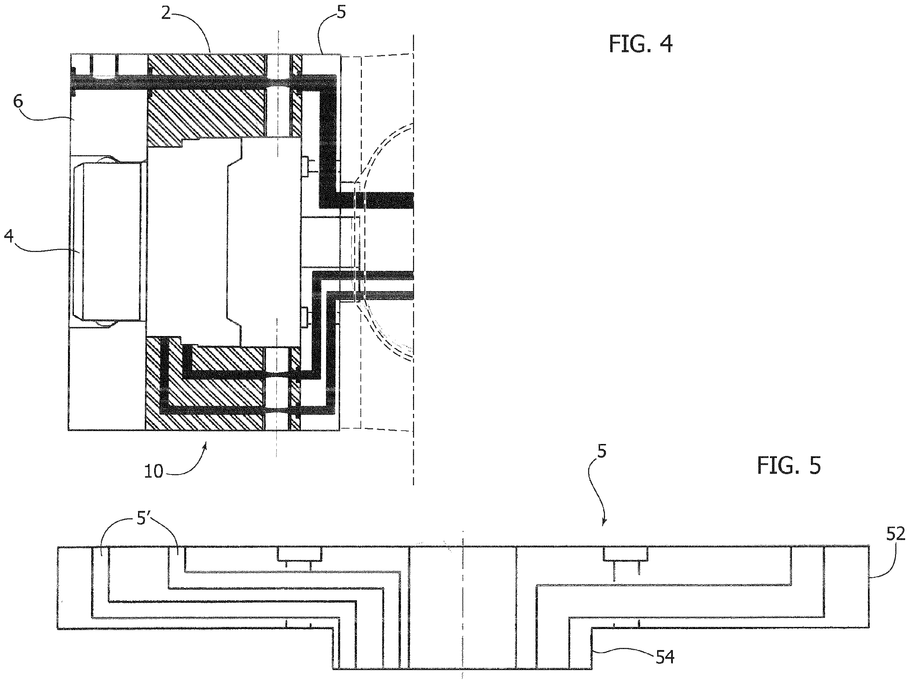

- Figure 5, and

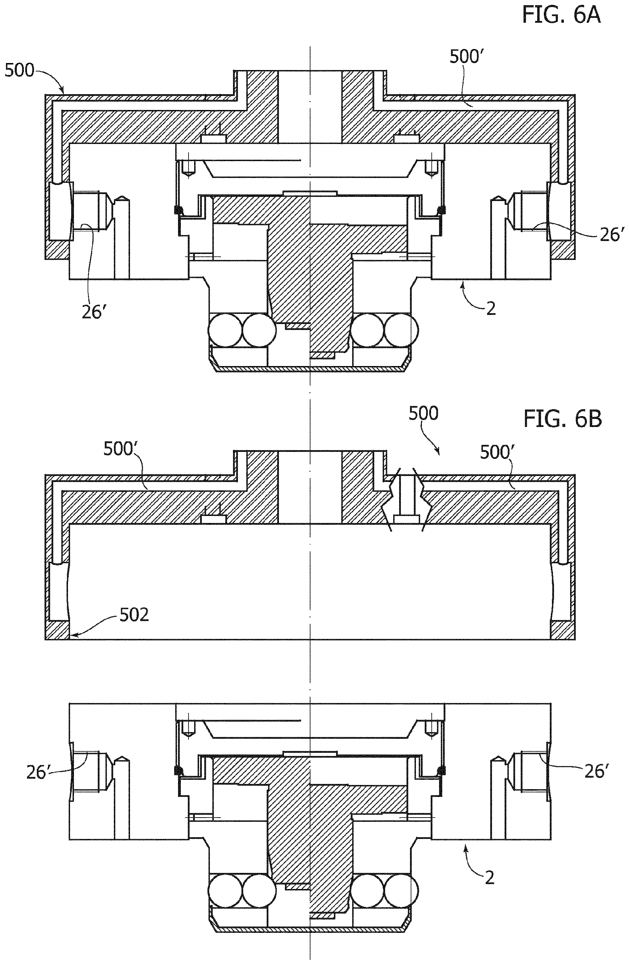

Figures 6A and 6B illustrate examples of a device comprising an adapter flange which are not in accordance with the present invention.

In the ensuing description, various specific details are illustrated aimed at enabling an in-depth understanding of the embodiments. The embodiments may be provided without one or more of the specific details, or with other methods, components, or materials, etc. In other cases, known structures materials, or operations are not shown or described in detail so that various aspects of the embodiment will not be obscured.

The references used herein are only provided for convenience and hence do not define the sphere of protection or the scope of the embodiments.

The tool-change device described herein has been specifically designed for use in applications where the tools with which the robot arm is to be associated require an external supply, for example a voltage and/or one or more service fluids of various types.

Moreover, for the reasons that will become evident from what follows, the device in question has been particularly devised for applications in which the robot arm on which the device in question is mounted has the bundle of electric cables and/or pipes that are provided for supplying the tool set inside the structure of the arm, at least in the region of the robot wrist.

In general, the device described herein, which in the figures is designated as a whole by the reference number 10, comprises:
- an annular body 2 that is to be mounted on the wrist of a robot arm and has a first face 22 and a second face 24 opposite to one another, outer side walls 26, and inner side walls 28; and
- an apparatus 4 for fixing the annular body to a connection body 6 coupled to the tool.

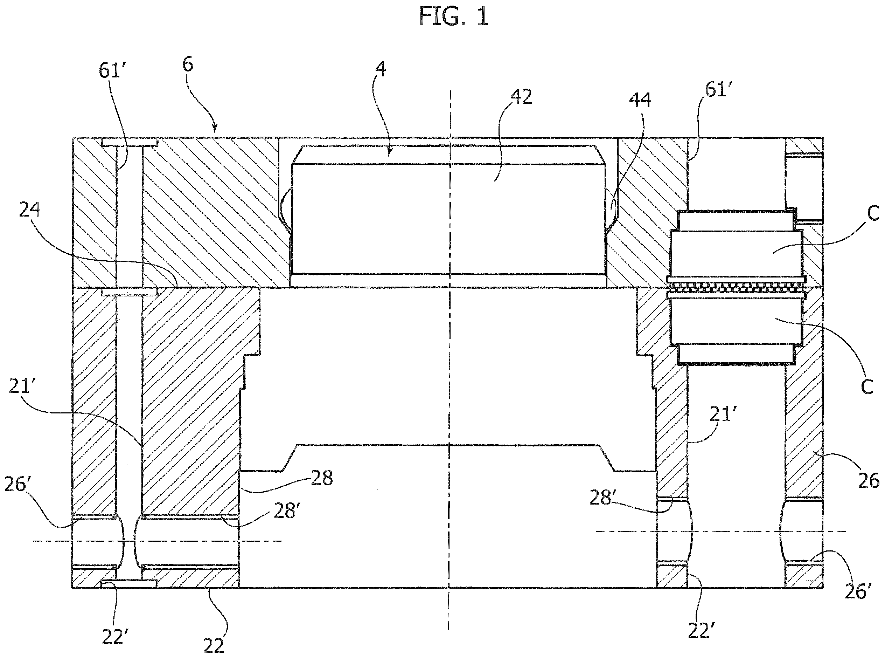

In a way in itself known, the fixing apparatus comprises a substantially cylindrical head 42, which carries on its outer surface a series of clamping elements 44 that can be driven via pneumatic means into a position where they project from the outer surface of the head. As may be seen in Figure 1, during operation, the head is inserted within a corresponding cavity made in the connection body 6 coupled to the tool, and the clamping elements come to bear upon a corresponding contrast surface provided in the cavity. In this condition, the tool is hence rigidly fixed on the device 10.

The annular body 2 comprises a series of bores 21' that constitute passages for the supply connections of the tool, and that, in operation, set themselves in a condition of mutual connection with corresponding bores 61' that are made in the body 6 associated to the tool and in turn constitute the connections of the tool. The bores in question may constitute the conduits through which the service fluids of the tool flow or else may house inside them electric connectors proper - see the connectors C represented schematically in Figure 1 - designed to set in connection the electrical cables carried by the robot with the electrical cables carried by the tool.

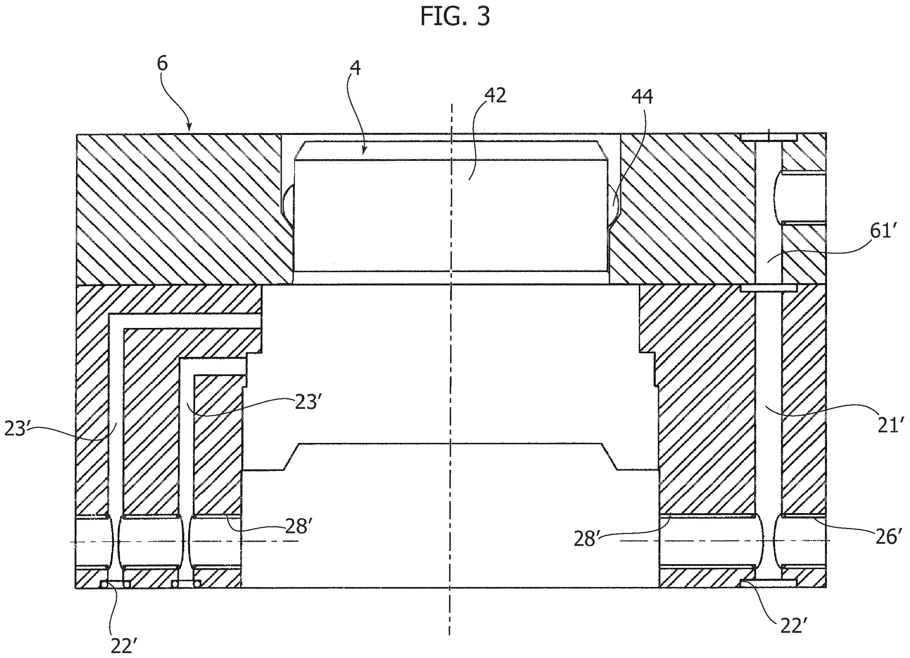

As may be seen in Figure 3, the annular body 2 may moreover comprise one or more bores 23' for supply of the service fluid, usually air, designed to actuate the fixing apparatus of the tool-change device itself.

The tool-change device described herein is characterized in that associated to the aforesaid bores 21' and 23, individually or in sets, is a respective opening for connection with the connections coming from the robot arm, which opens out on the face 22 of the annular body, and/or a respective connection opening, which opens out on one of the inner side walls 28 of said body. In the embodiment illustrated in the figures, the annular body has, in particular, both openings 22' made on the face 22 and openings 28' made on the inner walls 28, in association with the various bores made in the body.

The characteristic referred to above enables connection of the bundle of cables and pipes of the robot to the tool-change device without any need to gain access to the device from outside, but it being instead possible to reach it from the face 22 up against the wrist of the robot arm or at the inner side walls 28.

This aspect is particularly advantageous for those applications referred to above in which the robot arm has the bundle of the connections that is contained inside it so that the various cables and/or pipes of the bundle can terminate their path inside the wrist, or in any case inside the tool-change device, without having to exit therefrom, as instead is the case of tool-change devices according to the prior art.

In the example illustrated in Figure 4, the device comprises an adapter flange 5, designed to set itself between the robot wrist and the annular body 2 of the device and to be used for those applications in which there is envisaged connection of the bundle of the robot arm with the openings 22' made on the face 22 of the annular body 2.

In various examples, as in the one illustrated, the flange in question has two portions 52, 54 of different diameter, of which the one with larger diameter is designed to be associated to the annular body 2, whereas the other is designed to be inserted within the hollow wrist of the robot. The flange 5 has a series of conduits or bores 5', which open out on its face of larger diameter defined by the first portion 52 and, on the opposite side, on the face of smaller diameter defined by the second portion 54, and are designed to set in mutual connection the openings 22' made on the face 22 of the annular body 2 with the cables and/or pipes of the bundle of the robot arm. In a way similar to the bores 21', 23' of the body 2, the conduits or bores in question may constitute the conduits flowing in which are the service fluids of the tool or else may house electrical connectors designed to set in connection the electrical cables carried by the robot with the electrical cables carried by the tool.

As may be seen in the figures, in both of the examples of application illustrated, the bundle of the connections of the robot arm is positioned inside, and substantially in the axial direction of the arm, also in the region where it connects up to the device 10. In the example illustrated, the openings 22' are used in combination with the adapter flange 5 shown in Figure 5, but there may in any case be envisaged uses in which they are, instead, directly connected to the connections of the robot, for example when the robot flange itself has a configuration similar to that of the flange 5 in question.

In various preferred embodiments, as in the ones illustrated, however, the body 2 moreover has, in association to the various bores 21', respective openings 26' that open out, instead, on the outer walls 26, in order to enable connection of the connections to the device 10 also from outside.

In the example illustrated in Figures 6A and 6B (in these figures the elements in common with those the embodiments described previously are designated by the same reference numbers), the body 2 of the device has, instead, only openings 26' that open out on the outer walls 26 as in traditional devices. In this case, the device 10 comprises an adapter flange 500 of a type altogether similar to the flange 5 illustrated previously, which directly connects up to the cables and/or pipes that are located within the robot wrist but is, instead, configured for setting in mutual connection with the above cables and/or pipes the external openings 26' made on the body 2. In particular, the flange 500 has its own larger portion that extends for a width even greater than that of the body 2 and defines a cylindrical seat 502 that is to receive the body. The internal conduits 500' of the flange, which on the smaller portion of the flange still open out on the respective outer face, as in the flange 5 illustrated previously, on the larger portion open out, instead, on the cylindrical inner walls of the seat 502.

Also in this example, the connection of the bundle of the robot to the tool-change device may be made internally, without any need to gain access to the device from outside. It should be noted that the adapter flanges 5 and 500 illustrated above do not necessarily have to present two portions of different diameter as in the embodiments illustrated in Figures 5 and 6A-6B, but may, instead, have one and the same diameter, with the characteristic that, on the face that is to be mounted on the wrist of the robot arm, the bores and conduits provided in the flanges give out within a smaller area that is to be engaged by the robot wrist. It should be noted, however, that the bodies and the flanges in question do not necessarily have to present a circular profile, but may instead even have a polygonal profile, for example, rectangular. In these cases, the teachings provided above regarding the "diameter" apply with reference to one or more of the main transverse dimensions of the bodies and flanges.

## Claims

1. A device for connection of a tool to a robot arm, wherein said tool has electrical and/or service-fluid connections with said robot arm, said device comprising:
- an annular body (2) having a first face designed to be mounted on the wrist of a robot arm, a second face (24) opposite to said first face (22), outer side walls (26), and inner side walls (28); and
- an apparatus (4) for fixing said annular body (2) to a connection body (6) coupled to said tool;
wherein said second face of said annular body (2) is designed to be coupled to a face of said connection body (6); and
wherein said annular body (2) comprises two or more bores or cavities (21', 23') that constitute passages or portions of said connections, and wherein said bores or cavities (21', 23') are designed to set themselves in a condition of mutual connection with corresponding bores or cavities (5') made within said connection body (6);
wherein:
associated to said two or more bores or cavities (21', 23') of said annular body (2) is at least one opening (22') that opens out on said first face (22) and optionally at least one opening (28') that opens out on at least one of the inner side walls (28) of said annular body (2),
at least one of the bores or cavities (21') of said annular body (2) and its associated opening that opens out on said first face (22) houses an electrical connector, and at least one of the bores or cavities (21') of said annular body (2) and its associated opening that opens out on said first face (22) is configured for supplying fluid to the connection body (6).

2. The device according to Claim 1, wherein associated to said bores or cavities (21', 23') of said annular body (2) is at least one opening (22') that opens out on at least one of the outer side walls (26) of said body (2).

## Patentansprüche

1. Vorrichtung zum Verbinden eines Werkzeugs mit einem Roboterarm, wobei das Werkzeug Elektro- und/oder Betriebsflüssigkeitsverbindungen mit dem Roboterarm aufweist, wobei die Vorrichtung umfasst:
- einen ringförmigen Körper (2) mit einer ersten Seitenfläche, die dazu ausgelegt ist, am Handgelenk eines Roboterarms angebracht zu werden, einer zweiten Seitenfläche (24) gegenüber der ersten Seitenfläche (22), äußeren Seitenwänden (26) und inneren Seitenwänden (28) ; und
- ein Gerät (4) zum Befestigen des ringförmigen Körpers (2) an einem Verbindungskörper (6), der an das Werkzeug gekuppelt ist;
wobei die zweite Seitenfläche des ringförmigen Körpers (2) dazu ausgelegt ist, an eine Seitenfläche des Verbindungskörpers (6) gekuppelt zu werden; und
wobei der ringförmige Körper (2) zwei oder mehr Bohrungen oder Hohlräume (21', 23') umfasst, die Durchgänge oder Abschnitte der Verbindungen bilden, und wobei die Bohrungen oder Hohlräume (21', 23') dazu ausgelegt sind, sich in eine Bedingung wechselseitiger Verbindung mit entsprechenden Bohrungen oder Hohlräumen (5') zu versetzen, die innerhalb des Verbindungskörpers (6) hergestellt sind;
wobei:
den zwei oder mehr Bohrungen oder Hohlräumen (21', 23') des ringförmigen Körpers (2) zumindest eine Öffnung (22') zugeordnet ist, die auf der ersten Seitenfläche (22) mündet, und optional zumindest eine Öffnung (28'), die auf zumindest einer der inneren Seitenwände (28) des ringförmigen Körpers (2) mündet,
zumindest eine der Bohrungen oder Hohlräume (21') des ringförmigen Körpers (2) und ihre/seine zugeordnete Öffnung, die auf der ersten Seitenfläche (22) mündet, einen elektrischen Verbinder einfasst, und
zumindest eine der Bohrungen oder Hohlräume (21') des ringförmigen Körpers (2) und ihre/seine zugeordnete Öffnung, die auf der ersten Seitenfläche (22) mündet, zum Zuführen von Flüssigkeit zum Verbinderkörper (6) konfiguriert ist.

2. Vorrichtung nach Anspruch 1, wobei den Bohrungen oder Hohlräumen (21', 23') des ringförmigen Körpers (2) zumindest eine Öffnung (22') zugeordnet ist, die auf zumindest einer der äußeren Seitenwände (26) des Körpers (2) mündet.

## Revendications

1. Dispositif pour la connexion d'un outil à un bras de robot, dans lequel ledit outil a des connexions électriques et/ou de fluide de service avec ledit bras de robot, ledit dispositif comprenant :
- un corps annulaire (2) ayant une première face conçue pour être montée sur le poignet d'un bras de robot, une seconde face (24) opposée à ladite première face (22), des parois latérales externes (26) et des parois latérales internes (28) ; et
- un appareil (4) pour fixer ledit corps annulaire (2) à un corps de connexion (6) couplé audit outil ;
dans lequel ladite seconde face dudit corps annulaire (2) est conçue pour être couplée à une face dudit corps de connexion (6) ; et
dans lequel ledit corps annulaire (2) comprend deux alésages ou cavités (21', 23') ou plus qui constituent des passages ou des parties desdites connexions, et dans lequel lesdits alésages ou cavités (21', 23') sont conçus pour se régler eux-mêmes dans une condition de connexion mutuelle avec des alésages ou cavités (5') correspondants réalisés dans ledit corps de connexion (6) ;
dans lequel :
associée auxdits deux alésages ou cavités (21', 23') ou plus dudit corps annulaire (2), on trouve au moins une ouverture (22') qui s'ouvre sur ladite première face (22) et facultativement au moins une ouverture (28') qui s'ouvre sur au moins l'une des parois latérales internes (28) dudit corps annulaire (2),
au moins l'un des alésages ou cavités (21') dudit corps annulaire (2) et son ouverture associée qui s'ouvre sur ladite première face (22) loge un connecteur électrique et au moins l'un des alésages ou cavités (21') dudit corps annulaire (2) et son ouverture associée qui s'ouvre sur ladite première face (22) est configuré pour fournir du fluide au corps de connexion (6).

2. Dispositif selon la revendication 1, dans lequel, associée auxdits alésages ou cavités (21', 23') dudit corps annulaire (2), on trouve au moins une ouverture (22') qui s'ouvre sur au moins l'une des parois latérales externes (26) dudit corps (2).
